# EUROPEAN PATENT SPECIFICATION

(11) **EP 4 059 388 B1**
(45) Date of publication and mention of the grant of the patent: **04.11.2026**
(21) Application number: 21162568.6
(22) Date of filing: 15.03.2021
(51) Int. Cl.: A47J 36/00, A47J 36/02, A47J 43/07

(54) **APPLIANCE WITH RECEPTACLE LIGHTING FUNCTION**
GERÄT MIT AUFNAHMEBELEUCHTUNGSFUNKTION
APPAREIL DOTÉ D'UNE FONCTION D'ÉCLAIRAGE DE RÉCEPTACLE

(43) Date of publication of application: 21.09.2022
(73) Proprietor: BSH Hausgeräte GmbH, 81739 München (DE)
(72) Inventor: Cresnar, Mihael, 3205 Vitanje (SI); Habe, Mitja, 3320 Velenje (SI)

(56) References cited:
- WO-A1-2019/034494
- CN-U- 201 861 482
- CN-Y- 201 341 811
- DE-U1- 202019 104 360
- GB-A- 2 522 028
- US-A- 3 610 762
- US-A- 3 904 178

## Description

The present document relates to an appliance, in particular to a kitchen appliance, which comprises a receptacle for processing a food item.

An appliance, in particular a household and/or kitchen appliance, may comprise a receptacle for processing, e.g., for chopping and/or for cooking and/or for frying, a food item.

US 3 610 762 A describes a blender with an illuminated receptacle. CN 201 341 811 Y describes an electric mixing mincing machine with a lamp. CN 201 861 482 U describes an electric food stirring device with an illuminating device. GB 2 522 028 A describes a stand mixer with illumination means. DE 20 2019 104 360 U1 describes a lid for a bowl with an illumination inset.

The present document addresses the technical problem of increasing the comfort of use and/or the safety of such an appliance. The technical problem is solved by each of the independent claims. Preferred examples are described in the dependent claims.

According to an aspect, an appliance is described, wherein the appliance comprises a base unit and a receptacle, which are configured to be jointed or coupled (also referred to as assembled) and to be disjoined or decoupled (also referred to as disassembled). In other words, the base unit and the receptacle may be coupled with one another to form the appliance. Furthermore, the receptacle may be configured to be taken off of the base unit, e.g., to allow the receptacle to be cleaned separately from the base unit.

The appliance may be a kitchen and/or a cooking appliance. In particular, the appliance may be configured to process a food item which is placed within the interior of the receptacle, in particular within the interior of the bowl of the receptacle. By way of example, the appliance may be configured to cook, to chop, to shred, to fry, to steam, etc. a food item which is placed within the receptacle, in particular within the bowl of the receptacle. For this purpose, the base unit may comprise one or more electrically operated components, such as an electric motor. On the other hand, the receptacle may be dishwasher safe.

The base unit comprises a light source and a first light guide section. Furthermore, the receptacle comprises a second light guide section. The second light guide section may be part of the lid of the receptacle. The light source may comprise a light emitting diode (LED), in particular a multi-color light emitting diode. The first and/or second light guide section may each comprise a glass fiber, which is configured to guide light.

The first light guide section and the second light guide section may be positioned and/or designed and/or configured such that at a light transfer point the rear end face of the first light guide section is facing the front end face of the second light guide section, when the base unit and the receptacle are coupled or joined, in particular when the base unit and the receptacle are placed into a pre-defined aligned position with respect to one another. The base unit and the receptacle may each comprise one or more positioning elements which are configured to mechanically interact with one another to place the base unit and receptacle within the aligned position.

The rear end face of the first light guide section and the front end face of the second light guide section may be designed and/or configured such that light is coupled and/or guided from the rear end face of the first light guide section over an air gap into the front end face of the second light guide section. The air gap may be positioned at the light transfer point. In particular, the rear end face of the first light guide section and the front end face of the second light guide section may be designed and/or configured such that 50% or more of the light, which is ejected and/or emitted at the rear end face of the first light guide section is coupled and/or injected and/or inserted into the front end face of the second light guide section. The rear end face of the first light guide section may have a convex shape, and the front end face of the second light guide section may have a corresponding concave shape, thereby achieving a particularly high coupling factor across the air gap. Hence, the first and second light guiding sections may be designed and/or configured to form a joint light guide that is configured to transmit light from the light source of the base unit to the receptacle.

The rear end face of the second light guide section is preferably facing the interior of the receptacle, in particular the interior of the bowl of the receptacle. As a result of this, light from the light source may be used to efficiently illuminate the interior of the receptacle, in particular the interior of the bowl of the receptacle. In a preferred example, the rear end face of the second light guide section is configured to scatter light into the interior of the receptacle (in particular into the interior of the bowl), notably such that the scattered light covers an angular range of ±20° or more, preferably ±30° or more, with respect to the perpendicular of the rear end face of the second light guide section. By making use of a scattering rear end face, the entire interior of the receptacle (in particular the entire interior of the bowl) may be illuminated in a reliable manner.

The air gap at the light transfer point between the base unit and the receptacle, in particular the lid of the receptacle, may have a width of 1mm or more. As a result of this, a comfortable and reliable (manual) coupling and decoupling process of the receptacle and the base unit may be achieved.

The first light guide section is configured to guide light which is emitted by the light source to the light transfer point. In particular, the base unit may be designed and/or configured such that light from the light source is coupled and/or injected and/or inserted into the front end face of the first light guide section, and is guided towards the light transfer point at the rear end face of the first light guide section.

Furthermore, the second light guide section is configured to guide light from the light transfer point to the rear end face of the second light guide section for illuminating the interior of the receptacle (in particular the interior of the bowl of the receptacle). In particular, the receptacle may be designed and/or configured such that light, which is provided by the first light guide section at the light transfer point is coupled and/or injected and/or inserted into the front end face of the second light guide section, and is guided by the second light guide section towards the interior of the receptacle.

Hence, an appliance is described which comprises means for lighting up the interior of the receptacle of the appliance, thereby increasing the comfort of use and/or the safety of the appliance when processing a food item within the receptacle.

The receptacle, in particular the bowl, typically has an upper rim (opposite to the bottom of the receptacle, in particular the bowl). The front end face of the second light guide section may be located at the upper rim of the receptacle, thereby allowing the second light guide section to be integrated into the receptacle, in particular into the lid of the receptacle, in an efficient manner.

The first light guide section and the second light guide section may each have a (fully and/or completely) horizontal orientation at the transfer point. In particular, the rear end face of the first light guide section and the front end face of the second light guide section may each have a horizontally oriented perpendicular at the light transfer point. As a result of this, the light transfer point between the base unit and the receptacle, in particular the lid of the receptacle, may be implemented in an efficient and reliable manner.

The second light guide section may be curved such that the orientation of the second light guide section has a vertical component at the rear end face, and/or such that the rear end face of the second light guide section is pointing towards the bottom of the receptacle, in particular towards the bottom of the bowl. By doing this, content within the receptacle may be illuminated in a particularly reliable manner.

As indicated above, the receptacle may comprise a bowl which is configured to be placed on the base unit and which is configured to receive a food item for processing. Furthermore, the receptacle may comprise a lid which is configured to at least partially or fully cover the bowl (in particular the top of the bowl). At least a part of the lid may be transparent such that a user is enabled to look through the transparent part of the lid into the receptacle (e.g., when processing a food item within the bowl). By way of example, the lid may comprise a non-transparent frame which encloses the transparent part of the lid. The lid may be configured to be fixed onto the bowl, e.g., for closing the receptacle to prevent food from being ejected out of the bowl. On the other hand, the lid may be configured to be detached from the bowl, e.g., for cleaning purposes.

The second light guide section may be integrated into the lid of the receptacle. In particular, the second light guide section may be integrated into the frame of the lid, thereby allowing the content within the receptacle, in particular within the bowl of the receptacle, to be illuminated in a particularly efficient and reliable manner. The lid may not comprise any electronic or electric component. In other words, the lid may be free of any electronic or electric component. Furthermore, the lid may be dishwasher safe.

The appliance, in particular the base unit, may comprise a control unit, wherein the control unit is configured to control the light source, in particular for activating or deactivating the light source and/or for adapting a property, such as the color and/or the intensity and/or a flicker state, of the light which is emitted by the light source. By providing a control unit for controlling the light source, the comfort of use and/or the safety of the appliance may be further increased.

In the context of adapting a property of the light, the intensity of the light may be increased or decreased. Alternatively, or in addition, the color of the light may be modified. Alternatively, or in addition, the light may change from a flicker state within which the light does not flicker to a flicker state within which the light flickers. Furthermore, the frequency at which the light flickers may be adapted. Hence, adapting the flicker state of the light may comprise activating or deactivating the flickering of the light. Furthermore, the frequency of the flickering may be modified when adapting the flicker state of the light.

The control unit may be configured to determine whether or not the receptacle and the base unit are joined or coupled with one another. This may be determined based on measurement information which is provided by a positioning sensor of the appliance. The positioning sensor may be located at the positioning elements of the appliance. In particular, it may be determined by the control unit whether or not the receptacle and the base unit are coupled or joined in the aligned position.

Furthermore, the control unit may be configured to enable the activation of the light source, if it is determined, possibly only if it is determined, that the receptacle and the base unit are coupled or joined, in particular are coupled or joined in the aligned position. Alternatively, or in addition, the control unit may be configured to prevent the activation of the light source, if it is determined that the receptacle and the base unit are not coupled or are not joined, in particular are not coupled or joined in the aligned position. The actual activation and/or deactivation of the light source may be initiated by a user via the user interface of the appliance. On the other hand, the control unit may be configured to block the activation of the light source, if the receptacle is not placed and/or not correctly placed onto the base unit. By doing this, the safety and/or the comfort of use of the appliance can be increased.

The control unit may be configured to determine temperature information regarding the temperature of the content, in particular the food item, within the receptacle (i.e. within the bowl of the receptacle). The temperature information may be determined using a temperature sensor of the appliance. A property, in particular the color and/or the intensity and/or the flicker state, of the light which is emitted by the light source may be adapted in dependence of the temperature information. In particular, a warning color may be used, if the temperature is above a predetermined temperature threshold. By doing this, the safety and the comfort of use of the appliance may be increased.

Alternatively, or in addition, the control unit may be configured to determine color information regarding the color of the content within the receptacle, and/or recipe information regarding the recipe of the food item which is processed within the receptacle, and/or type information regarding the type of processing (such as frying, baking, steaming, chopping, shredding, mixing, cooking, etc.).

A property, in particular the color and/or the intensity and/or the flicker state, of the light which is emitted by the light source may be adapted in dependence of the color information and/or the recipe information and/or the type information. By doing this, the safety and the comfort of use of the appliance may be increased.

According to a further aspect, a method for controlling the light source of the appliance according to the present patent application is described. The method comprises determining whether or not the receptacle and the base unit are coupled or joined. Furthermore, the method comprises preventing the activation of the light source, if it is determined that the receptacle and the base unit are not coupled or not joined, thereby increasing the safety and the comfort of use of the appliance.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
- Figure 1: shows an appliance, notably a cooking processor;
- Figures 2a and 2b: show different views of an appliance comprising a lighting unit for illuminating the interior of the receptacle of the appliance;
- Figures 3a and 3b: show different sectional views of the appliance of Figures 2a and 2b; and
- Figure 4: shows a flow chart of method for controlling the light source of an appliance.

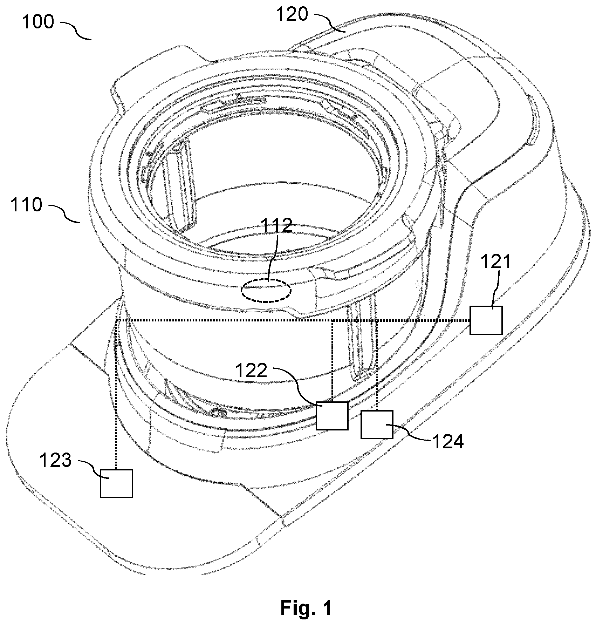

As outlined above, the present document is directed at increasing the comfort of use of an appliance which comprises a receptacle for processing a food item. Fig. 1 shows an appliance 100, in particular a cooking appliance, which comprises a base unit 120 and a receptacle 110. The receptacle 110 may be placed on the base unit 120 for processing a food item which is placed within the interior of the receptacle 110. By way of example, the appliance 100, in particular the base unit 120, may comprise a heating and/or cooling unit 124 which is configured to heat up and/or to cool down the temperature of the receptacle 110, e.g., for cooking the food item within the receptacle 110 or for cooling down the food item within the receptacle 110. Alternatively, or in addition, the appliance 100, in particular the base unit 120, may comprise an electrical motor 122 for operating a tool 112, e.g., a knife, within the receptacle 110, thereby enabling the food item within the receptacle 110 to be mixed, cut and/or shredded. The motor 122 and/or the heating and/or cooling unit 124 may be controlled by a control unit 121 of the appliance 100, in particular of the base unit 120.

The appliance 100 typically comprises a user interface 123 which allows a user of the appliance 100 to interact with the appliance 100, e.g., for starting or for interrupting processing of the food item which is placed within the receptacle 110 of the appliance 100.

The receptacle 110, in particular the bowl of the receptacle 110, may be rather deep, in order to provide a receptacle 110 having a sufficiently large volume (e.g., 1 liter or more, or 2 liters or more) for processing a food item, without the risk that a portion of the food item is ejected from the receptacle 110 during processing. On the hand, the use of a relatively deep receptacle 110 may lead to a situation, where the content within the receptacle 110 is only poorly visible for a user of the appliance 100. As a result of this, the user may have difficulties in monitoring the processing of the food item within the receptacle 110.

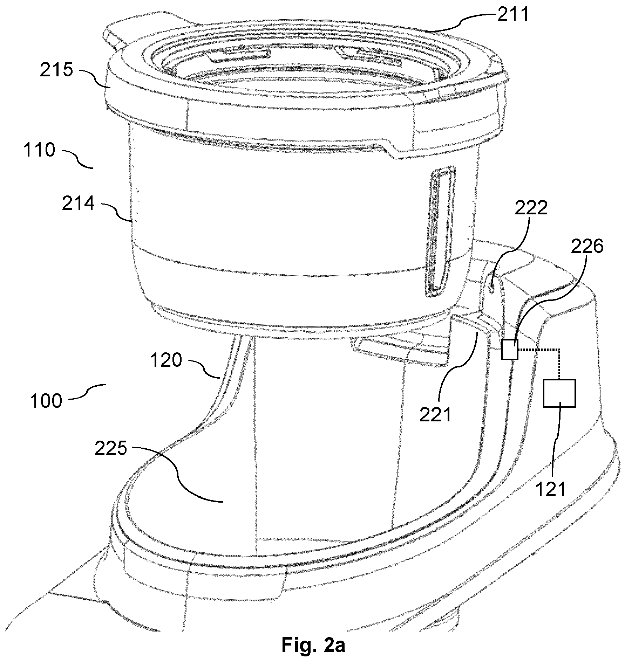

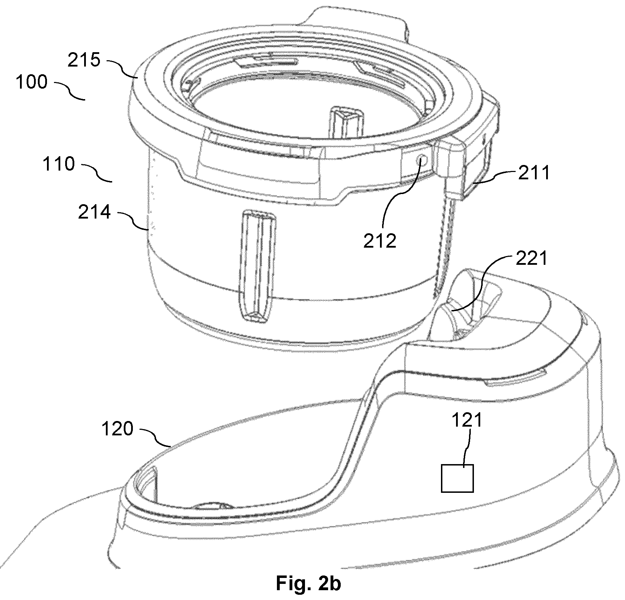

Figures 2a and 2b show different views of an appliance 100 which comprises a lighting unit for illuminating the interior of the receptacle 110 of the appliance 100. As shown in Figs. 2a and 2b, the base unit 120 comprises a recess 225 into which the receptacle 110 can be placed. Furthermore, the appliance 100 may comprise a positioning and possibly a locking mechanism 211, 221, which allows the receptacle 110 to be placed onto the base unit 120 in a defined position. By way of example, the base unit 120 may comprise a base unit positioning element 221 which is configured to interact with a complementary receptacle positioning element 211, in order to hold the receptacle 110 in a defined and fixed position on the base unit 120. The defined position of the receptacle 110 and the base unit 120 may be referred to as the aligned position.

Figs. 2a and 2b show a (first) light guide section 222 of the base unit 120 and a corresponding (second) light guide section 212 of the receptacle 110, which form a joint light guide when the receptacle 110 and the base unit 120 are in the aligned position. The light guide from the base unit 120 to the receptacle 110 may be used to transmit light from a light source at the base unit 120 to the receptacle 110 for illuminating the interior of the receptacle 110, in particular the interior of the bowl of the receptacle 110.

As shown in Figs. 2a and 2b, the receptacle 110 may comprise a lid 215 which is configured to cover the receptacle 110, in particular the bowl 214 of the receptacle 110. The lid 215 may comprise a (non-transparent) frame (shown in Figs. 2a and 2b) which surrounds and/or encloses a (transparent) inner part of the lid 215 (not shown in Figs. 2a and 2b). The lid 215, in particular the frame of the lid 215, may be configured to be fixed onto the upper rim of the bowl 214 of the receptacle 110 in a detachable manner. The second light guide section 212 may be integrated into the lid 215, in particular into the frame of the lid 215.

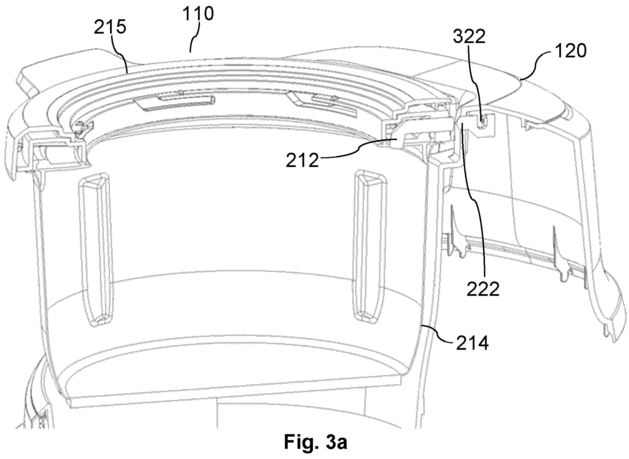

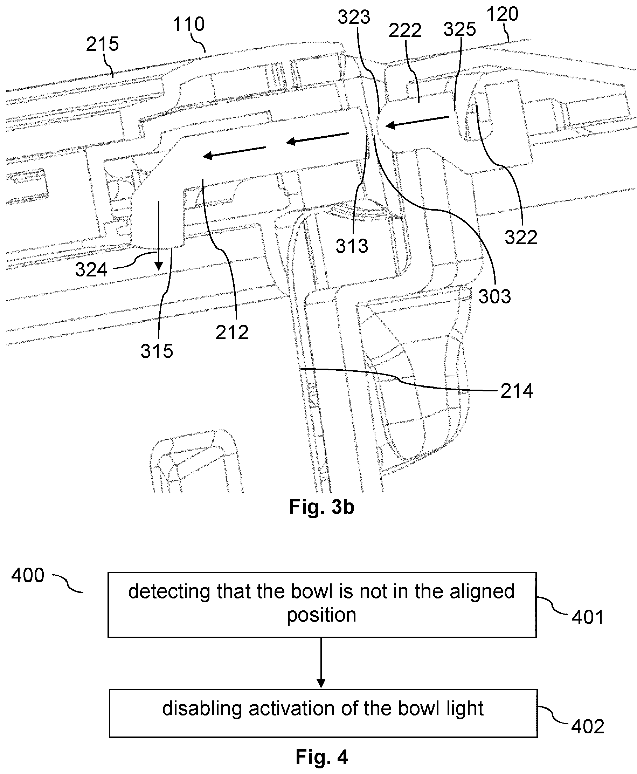

Figs. 3a and 3b show different sectional views of the receptacle 110 and of the base unit 120. In particular, a light source 322 of the base unit 120 is shown, which is configured to emit light 324 that is guided through the light guide 212, 222 towards the receptacle 110. The first light guide section 222 (of the base unit 120) comprises a rear end face 323 which is aligned with the corresponding front end face 313 of the second light guide section 212 (of the receptacle 110), wherein the receptacle 110 and the base unit 120 are in the aligned position. The end faces 313, 323 of the light guide sections 212, 222 are shaped such that a major fraction of the light 324 within the first light guide section 222 is transmitted over the air gap 303 to the second light guide section 212. By way of example, the rear end face 323 of the first light guide section 222 may have a convex shape, and the front end face 313 of the second light guide section 212 may have a corresponding concave shape.

As shown in Figs. 3b and 3b, the second light guide section 212 may be curved, in order to direct the light 324 towards the interior of the receptacle 110, in particular towards the interior of the bowl 214 of the receptacle 110. By way of example, the second light guide section 212 may have a horizontal orientation at the front end face 313 which is facing the first light guide section 222, thereby allowing a maximum amount of light 324 to be coupled and/or to be guided from the first light guide section 222 into the second light guide section 212. The second light guide section 212 may be curved towards a vertical orientation, such that the light 324 is emitted from the rear end face 315 of the second light guide section 212 towards the bottom of the receptacle 110, in particular towards the bottom of the bowl 214. By making use of a curved second light guide section 212, the interior of the bowl 214 of the receptacle 110 can be illuminated in a reliable manner.

The second light guide section 212, in particular the front end face 313 of the second light guide section 212, may be positioned within the upper rim of the bowl 214 of the receptacle 110. By doing this, the second light guide section 212 may be integrated within the receptacle 110 in an efficient manner. Furthermore, this positioning allows the entire interior of the bowl 214 of the receptacle 110 to be illuminated.

Hence, a lighting assembly for illuminating the content of the receptacle 110 of an appliance 100 is described. The appliance 100 comprises a receptacle 110, i.e. a bowl 214 which can possibly be covered by a lid 215, and a base unit 120, wherein the receptacle 110 and the base unit 120 may be configured to be joined and disjoined by a user. The receptacle 110, in particular the lid 215 of the receptacle 110, comprises a second light guide section 212, and the base unit 120 comprises a light source 322, e.g., a light emitting diode, LED, and a first light guide section 222.

For enabling lighting of the receptacle content, the receptacle 110 and the base unit 120 may be joined, such that the receptacle 110 and the base unit 120, in particular such that the light guide sections 212, 222, are in the aligned position. The appliance 100, in particular the base unit 120, may comprise a sensor 226 which is configured to indicate whether or not the receptacle 110 and the base unit 120 are in the aligned position. The sensor 226 may be configured to provide a measurement signal (i.e. measurement information) which indicates whether or not the receptacle 110 and the base unit 120 are in the aligned position to the control unit 121 of the appliance 100.

Subject to receiving a signal which indicates that the receptacle 110 and the base unit 120 are in the aligned position, lighting of the receptacle content may be enabled. In particular, the control unit 121 may be configured to allow the light source 322 to be activated, if (possibly only if) it is determined that the receptacle 110 and the base unit 120 are in the aligned position. Activation of the light source 322 may be automatic, as soon as it is determined that the receptacle 110 and the base unit 120 are in the aligned position. Alternatively, or in addition, activation of the light source 322 may occur subject to a user input via the user interface 123 of the appliance 100.

The light 324 which is generated by the light source 322 is guided by the first light guide section 222 of the base unit 120 towards the gap 303 between the receptacle 110 and the base unit 120, through the gap 303 to the second light guide section 212, and through the second light guide section 212 to the interior of the bowl 214 of the receptacle 110. The rear end face 315 of the second light guide section 212, which is facing the interior of the bowl 214 of the receptacle 110, may be shaped such that light 324 is scattered so that the interior of the bowl 214 of the receptacle 110 is illuminated within a relatively wide angle and/or area.

The control unit 121 may be configured to determine recipe information regarding the recipe which is used for processing the food item within the receptacle 110 of the appliance 100. The light source 322 may be controlled in dependence of the recipe information. In particular, a property of the light 324 which is emitted by the light source 322 may be adapted in dependence of the recipe information. Example properties are the color and/or the intensity and/or a flicker state of the light 324. By adapting the light 324 which is used for illuminating the interior of the receptacle 110 to the recipe and/or to the food item which is processed by the appliance 100, the comfort of use of the appliance 100 may be increased further.

By making use of an active (electrical) light source 322 within the base unit 120 and a passive (non-electrical) light guide section 212 within the receptacle 110 (in particular within the lid 215 of the receptacle 110), the lighting function may be provided in an efficient and reliable manner. Furthermore, a dishwasher safe receptacle 110 may be provided in an efficient manner. In addition, the safety of the appliance 100 may be improved, by integrating all electric parts, or at least the active and/or electrically driven light emitting parts, into the housing of the base unit 120.

The control unit 121 may be configured to determine temperature information regarding the temperature of the food item which is processed within the receptacle 110. The temperature information may be determined using a temperature sensor (not shown) of the appliance 100, in particular of the base unit 120. The control unit 121 may be configured to adapt a property, in particular the color, of the light 324 which is emitted by the light source 322 in dependence of the temperature information. By way of example, a warning color, for example red, may be used if the content of the receptacle 110 is hot. On the other hand, a neutral color, for example white, may be used if the content of the receptacle 110 has a nonhazardous temperature. In a further example, another warning color, for example blue, may be used if the content of the receptacle 110 is at freezing temperature. By adapting one or more properties of the light 324 to the temperature of the content of the receptacle 110, the safety and/or the comfort of use of the appliance 100 may be increased.

The control unit 121 may be configured to determine processing information regarding the type of processing which is performed within the receptacle 110. Example types of processing are: frying, roasting, braising, baking, simmering, sous-vide processing, searing, etc. One or more properties, notably the color and/or the intensity, of the light 314 may be adapted in dependence of the processing information, thereby further increasing the comfort of use of the appliance 100.

The control unit 121 may be configured to determine color information regarding the color of the content of the receptacle 110. In particular, color information regarding the color of the food item which is processed within the receptacle 110 may be determined. The color information may be determined based on the recipe which is used for processing the food item. The recipe may be stored on a storage unit of the appliance 100. Alternatively, or in addition, the color information may be determined using a color sensor of the appliance 100, such as a camera, which is configured to determine the color of the content of the receptacle 110. A property of the light 324, notably the color and/or the intensity and/or the flicker state, may be adapted in dependence of the color information. In particular, the light 324 may be adapted in order to increase the attractiveness of the appearance of the food item which is processed within the receptacle 110, thereby improving the user experience when using the appliance 100.

Fig. 4 shows a flow chart of an exemplary (possibly computer-implemented) method 400 for controlling the light source 322 of an appliance 100. The method 400 may be executed by the control unit 121 of the appliance 100.

The appliance 100 comprises a base unit 120 and a receptacle 110, which are configured to be joined and to be disjoined manually by a user of the appliance 100. Furthermore, the base unit 120 comprises a light source 322, in particular an LED, and a first light guide section 222, and the receptacle 110, in particular the lid 215 of the receptacle 110, comprises a second light guide section 212. The first light guide section 222 and the second light guide section 212 may be such that at a light transfer point (between the base unit 120 and (the lid 215 of) the receptacle 110), the rear end face 323 of the first light guide section 222 is facing the front end face 313 of the second light guide section 212, when (in particular only when) the base unit 120 and the receptacle 110 are joined, in particular are joined in the aligned position.

The rear end face 315 of the second light guide section 212 is facing the interior of the (bowl 214 of the) receptacle 110, in order to allow the interior of the (bowl 214 of the) receptacle 110 to be illuminated by the light 324 from the light source 322.

The first light guide section 222 may be configured to guide light 324 which is emitted by the light source 322 to the light transfer point. For this purpose, the light 324 from the light source 322 may at least partially be coupled and/or injected and/or inserted into the front end face 325 of the first light guide section 322. Furthermore, the second light guide section 212 may be configured to guide light 324 from the light transfer point to the rear end face 315 of the second light guide section 212. The light 324 may be ejected and/or emitted from the second light guide section 312 via the rear end face 315, thereby illuminating the interior of the (bowl 214 of the) receptacle 110.

The method 400 comprises determining 401 whether or not the receptacle 110 and the base unit 120 are joined. In particular, it may be determined, e.g., using the measurement information from the positioning sensor 226, whether or not the receptacle 110 and the base unit 120 have been brought into the aligned position.

In addition, the method 400 comprises preventing 402 the activation of the light source 322, if it is determined that the receptacle 110 and the base unit 120 are not joined, in particular, if it is determined that the receptacle 110 and the base unit 120 are not in the aligned position. By doing this, the safety and the comfort of use of the appliance 100 may be increased.

It should be noted that the description and drawings merely illustrate the principles of the proposed methods and systems. Those skilled in the art will be able to implement various arrangements that, although not explicitly described or shown herein, embody the principles of the invention as long as they are encompassed by the appended claims.

**Furthermore, all** examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. An appliance (100); wherein
- the appliance (100) comprises a base unit (120) and a receptacle (110), which are configured to be joined and to be disjoined;
- the receptacle (110) comprises a bowl (214) and a lid (215) for covering the bowl (214);
- the lid (215) comprises a non-transparent outer frame which encloses a transparent part of the lid (215);
- the base unit (120) comprises a light source (322) and a first light guide section (222);
- the receptacle (110) comprises a second light guide section (212);
- the second light guide section (212) is at least partially or fully integrated into the outer frame of the lid (215);
- the first light guide section (222) and the second light guide section (212) are such that at a light transfer point a rear end face (323) of the first light guide section (222) is facing a front end face (313) of the second light guide section (212), when the base unit (120) and the receptacle (110) are joined;
- a rear end face (315) of the second light guide section (212) is facing an interior of the receptacle (110);
- the first light guide section (222) is configured to guide light (324) which is emitted by the light source (322) to the light transfer point; and
- the second light guide section (212) is configured to guide light (324) from the light transfer point to the rear end face (315) of the second light guide section (212) for illuminating the interior of the receptacle (110).

2. The appliance (100) according to claim 1, wherein the rear end face (323) of the first light guide section (222) and the front end face (313) of the second light guide section (212) are configured such that
- light (324) is coupled from the rear end face (323) of the first light guide section (222) over an air gap (303) into the front end face (313) of the second light guide section (212); and/or
- 50% or more of the light (324), which is emitted at the rear end face (323) of the first light guide section (222) is coupled into the front end face (313) of the second light guide section (212).

3. The appliance (100) according to claim 2, wherein the air gap (313) has a width of 1mm or more.

4. The appliance (100) according to any of the previous claims, wherein
- the rear end face (323) of the first light guide section (222) has a convex shape; and
- the front end face (313) of the second light guide section (212) has a corresponding concave shape.

5. The appliance (100) according to any of the previous claims, wherein
- the receptacle (110), in particular the bowl (214) of the receptacle (110), has an upper rim; and
- the front end face (313) of the second light guide section (212) is located at the upper rim of the receptacle (110).

6. The appliance (100) according to any of the previous claims, wherein
- the first light guide section (222) and the second light guide section (212) each have a horizontal orientation at the transfer point; and
- the second light guide section (212) is curved such that the orientation of the second light guide section (212) has a vertical component at the rear end face (315), and/or such that the rear end face (315) of the second light guide section (212) is pointing towards a bottom of the receptacle (110).

7. The appliance (100) according to any of the previous claims, wherein the rear end face (315) of the second light guide section (212) is configured to scatter light (324) into the interior of the receptacle (110), notably such that the scattered light (324) covers an angular range of ±20° or more, preferably ±30° or more, with respect to a perpendicular of the rear end face (315) of the second light guide section (212).

8. The appliance (100) according to any of the previous claims, wherein
- the appliance (100), in particular the base unit (120), comprises a control unit (121); and
- the control unit (121) is configured to control the light source (322), in particular for activating or deactivating the light source (322) and/or for adapting a property of the light (324) which is emitted by the light source (322).

9. The appliance (100) according to claim 8, wherein the control unit (121) is configured to
- determine, in particular using measurement information of a positioning sensor (226) of the appliance (100), whether or not the receptacle (110) and the base unit (120) are joined, in particular whether or not the receptacle (110) and the base unit (120) are joined in an aligned position; and
- enable the activation of the light source (322), if it is determined, in particular only if it is determined, that the receptacle (110) and the base unit (120) are joined, in particular are joined in the aligned position; and/or
- prevent the activation of the light source (322), if it is determined that the receptacle (110) and the base unit (120) are not joined, in particular are not joined in the aligned position.

10. The appliance (100) according to any of claims 8 to 9, wherein the control unit (121) is configured to
- determine temperature information regarding a temperature of content of the receptacle (110); and
- adapt a property, in particular a color and/or an intensity and/or a flicker state, of the light (324) which is emitted by the light source (322) in dependence of the temperature information.

11. The appliance (100) according to any of claims 8 to 10, wherein the control unit (121) is configured to
- determine color information regarding a color of content of the receptacle (110), and/or recipe information regarding a recipe of a food item which is processed within the receptacle (110) and/or type information regarding a type of processing which is performed; and
- adapt a property, in particular a color and/or an intensity and/or a flicker state, of the light (324) which is emitted by the light source (322) in dependence of the color information and/or the recipe information and/or the type information.

12. The appliance (100) according to any of the previous claims, wherein
- the lid (215) of the receptacle (110) does not comprise any electrical component; and/or
- the receptacle (110), in particular the lid (215) of the receptacle (110), does not comprise any active and/or electrically operated light emitting element; and/or
- the receptacle (110), in particular the lid (215) of the receptacle (110), is dishwasher safe.

13. The appliance (100) according to any of the previous claims, wherein the light source (322) comprises a light emitting diode, notably a multi-color light emitting diode.

14. The appliance (100) according to any previous claim, wherein
- the appliance (100) is a kitchen and/or a cooking appliance; and/or
- the appliance (100) is configured to process a food item which is placed within the interior of the receptacle (110).

15. A method (400) for controlling a light source (322) of an appliance (100); wherein
- the appliance (100) comprises a base unit (120) and a receptacle (110), which are configured to be joined and to be disjoined;
- the receptacle (110) comprises a bowl (214) and a lid (215) for covering the bowl (214);
- the lid (215) comprises a non-transparent outer frame which encloses a transparent part of the lid (215);
- the base unit (120) comprises a light source (322) and a first light guide section (222);
- the receptacle (110) comprises a second light guide section (212);
- the second light guide section (212) is at least partially or fully integrated into the outer frame of the lid (215);
- the first light guide section (222) and the second light guide section (212) are such that at a light transfer point a rear end face (323) of the first light guide section (222) is facing a front end face (313) of the second light guide section (212), when the base unit (120) and the receptacle (110) are joined;
- a rear end face (315) of the second light guide section (212) is facing an interior of the receptacle (110);
- the first light guide section (222) is configured to guide light (324) which is emitted by the light source (322) to the light transfer point; and
- the second light guide section (212) is configured to guide light (324) from the light transfer point to the rear end face (315) of the second light guide section (212) for illuminating the interior of the receptacle (110); and
wherein the method (400) comprises,
- determining (401) whether or not the receptacle (110) and the base unit (120) are joined; and
- preventing (402) the activation of the light source (322), if it is determined that the receptacle (110) and the base unit (120) are not joined.

## Patentansprüche

1. Gerät (100), wobei
- das Gerät (100) eine Grundeinheit (120) und ein Gefäß (110) umfasst, die so ausgelegt sind, dass sie miteinander verbunden und voneinander getrennt werden können,
- das Gefäß (110) eine Schüssel (215) und einen Deckel (215) zum Abdecken der Schüssel (214) umfasst,
- der Deckel (215) einen nicht transparenten Außenrahmen umfasst, der einen transparenten Teil des Deckels (215) umgibt,
- die Grundeinheit (120) eine Lichtquelle (322) und einen ersten Lichtwellenleiterabschnitt (222) umfasst,
- das Gefäß (110) einen zweiten Lichtwellenleiterabschnitt (212) umfasst,
- der zweite Lichtwellenleiterabschnitt (212) zumindest teilweise oder vollständig in den Außenrahmen des Deckels (215) integriert ist,
- der erste Lichtwellenleiterabschnitt (222) und der zweite Lichtwellenleiterabschnitt (212) so gestaltet sind, dass eine hintere Stirnfläche (323) des ersten Lichtwellenleiterabschnitts (222) an einem Lichtübergangspunkt einer vorderen Stirnfläche (313) des zweiten Lichtwellenleiterabschnitts (212) gegenüberliegt, wenn die Grundeinheit (120) und das Gefäß (110) miteinander verbunden sind,
- eine hintere Stirnfläche (315) des zweiten Lichtwellenleiterabschnitts (212) in das Gefäß (110) weist,
- der erste Lichtwellenleiterabschnitt (222) so ausgelegt ist, dass er von der Lichtquelle (322) emittiertes Licht (324) zum Lichtübergangspunkt leitet, und
- der zweite Lichtwellenleiterabschnitt (212) so ausgelegt ist, dass er zwecks Beleuchtens des Inneren des Gefäßes (110) Licht (324) vom Lichtübergangspunkt zu seiner hinteren Stirnfläche (315) leitet.

2. Gerät (100) nach Anspruch 1, wobei die hintere Stirnfläche (323) des ersten Lichtwellenleiterabschnitts (222) und die vordere Stirnfläche (313) des zweiten Lichtwellenleiterabschnitts (212) so ausgelegt sind, dass
- Licht (324) von der hinteren Stirnfläche (323) des ersten Lichtwellenleiterabschnitts (222) über einen Luftspalt (303) in die vordere Stirnfläche (313) des zweiten Lichtwellenleiterabschnitts (212) eingekoppelt wird und/oder
- mindestens 50% des Lichts (324), das an der hinteren Stirnfläche (323) des ersten Lichtwellenleiterabschnitts (222) emittiert wird, in die vordere Stirnfläche (313) des zweiten Lichtwellenleiterabschnitts (212) eingekoppelt wird.

3. Gerät (100) nach Anspruch 2, wobei der Luftspalt (303) eine Breite von mindestens 1 mm aufweist.

4. Gerät (100) nach einem der vorhergehenden Ansprüche, wobei
- die hintere Stirnfläche (323) des ersten Lichtwellenleiterabschnitts (222) eine konvexe Form aufweist und
- die vordere Stirnfläche (313) des zweiten Lichtwellenleiterabschnitts (212) eine entsprechende konkave Form aufweist.

5. Gerät (100) nach einem der vorhergehenden Ansprüche, wobei
- das Gefäß (110), insbesondere die Schüssel (214) des Gefäßes (110), einen oberen Rand aufweist und
- sich die vordere Stirnfläche (313) des zweiten Lichtwellenleiterabschnitts (212) an dem oberen Rand des Gefäßes (110) befindet.

6. Gerät (100) nach einem der vorhergehenden Ansprüche, wobei
- der erste Lichtwellenleiterabschnitt (222) und der zweite Lichtwellenleiterabschnitt (212) am Übergangspunkt jeweils eine horizontale Ausrichtung haben und
- der zweite Lichtwellenleiterabschnitt (212) so gekrümmt ist, dass seine Ausrichtung an der hinteren Stirnfläche (315) eine vertikale Komponente aufweist und/oder seine hintere Stirnfläche (315) zum Boden des Gefäßes (110) hin zeigt.

7. Gerät (100) nach einem der vorherigen Ansprüche, wobei die hintere Stirnfläche (315) des zweiten Lichtwellenleiterabschnitts (212) so ausgelegt ist, dass sie Licht (324) insbesondere so ins Innere des Gefäßes (110) streut, dass das gestreute Licht (324) einen Winkelbereich von mindestens ±20°, vorzugsweise mindestens ±30°, in Bezug auf eine Senkrechte der hinteren Stirnfläche (315) des zweiten Lichtwellenleiterabschnitts (212) abdeckt.

8. Gerät (100) nach einem der vorhergehenden Ansprüche, wobei
- das Gerät (100), insbesondere die Grundeinheit (120), eine Steuereinheit (121) umfasst und
- die Steuereinheit (121) so ausgelegt ist, dass sie die Lichtquelle (322) insbesondere zwecks Ein- oder Ausschaltens der Lichtquelle (322) und/oder zwecks Änderns einer Eigenschaft des von der Lichtquelle (322) emittierten Lichts (324) steuert.

9. Gerät (100) nach Anspruch 8, wobei die Steuereinheit (121) so ausgelegt ist, dass sie:
- insbesondere mithilfe von Messangaben aus einem Positioniersensor (226) des Geräts (100) ermittelt, ob das Gefäß (110) und die Grundeinheit (120) miteinander verbunden sind, insbesondere ob das Gefäß (110) und die Grundeinheit (120) in einer ausgerichteten Position miteinander verbunden sind, und
- das Einschalten der Lichtquelle (322) ermöglicht, wenn, insbesondere nur dann, wenn ermittelt wird, dass das Gefäß (110) und die Grundeinheit (120) miteinander verbunden sind, insbesondere in der ausgerichteten Position miteinander verbunden sind, und/oder
- das Einschalten der Lichtquelle (322) verhindert, wenn ermittelt wird, dass das Gefäß (110) und die Grundeinheit (120) nicht miteinander verbunden sind, insbesondere nicht in der ausgerichteten Position miteinander verbunden sind.

10. Gerät (100) nach einem der Ansprüche 8 bis 9, wobei die Steuereinheit (121) so ausgelegt ist, dass sie:
- Temperaturangaben zu einer Temperatur eines Inhalts des Gefäßes (110) ermittelt und
- in Abhängigkeit von den Temperaturangaben eine Eigenschaft, insbesondere eine Farbe und/oder eine Helligkeit und/oder eine Blinkeinstellung, des von der Lichtquelle (322) emittierten Lichts (324) ändert.

11. Gerät (100) nach einem der Ansprüche 8 bis 10, wobei die Steuereinheit (121) so ausgelegt ist, dass sie:
- Farbangaben zu einer Farbe eines Inhalts des Gefäßes (110) und/oder Rezeptangaben zu einem Rezept für ein im Gefäß (110) verarbeitetes Lebensmittel und/oder Artangaben zu einer durchgeführten Verarbeitungsart ermittelt und
- eine Eigenschaft, insbesondere eine Farbe und/oder eine Helligkeit und/oder eine Blinkeinstellung, des von der Lichtquelle (322) emittierten Lichts (324) in Abhängigkeit von den Farbangaben und/oder den Rezeptangaben und/oder den Artangaben ändert.

12. Gerät (100) nach einem der vorhergehenden Ansprüche, wobei
- der Deckel (215) des Gefäßes (110) keine elektrischen Bauteile umfasst und/oder
- das Gefäß (110), insbesondere der Deckel (215) des Gefäßes (110), keine aktiven und/oder elektrisch betriebenen Leuchtelemente umfasst und/oder
- das Gefäß (110), insbesondere der Deckel (215) des Gefäßes (110), spülmaschinenfest ist.

13. Gerät (100) nach einem der vorhergehenden Ansprüche, wobei die Lichtquelle (322) eine Leuchtdiode, insbesondere eine mehrfarbige Leuchtdiode umfasst.

14. Gerät (100) nach einem der vorhergehenden Ansprüche, wobei
- es sich bei dem Gerät (100) um ein Küchen- und/oder ein Gargerät handelt und/oder
- das Gerät (100) so ausgelegt ist, dass es ein in das Gefäß (110) hineingegebenes Lebensmittel verarbeiten kann.

15. Verfahren (400) zum Steuern einer Lichtquelle (322) eines Geräts (100), wobei
- das Gerät (100) eine Grundeinheit (120) und ein Gefäß (110) umfasst, die so ausgelegt sind, dass sie miteinander verbunden und voneinander getrennt werden können,
- das Gefäß (110) eine Schüssel (215) und einen Deckel (215) zum Abdecken der Schüssel (214) umfasst,
- der Deckel (215) einen nicht transparenten Außenrahmen umfasst, der einen transparenten Teil des Deckels (215) umgibt,
- die Grundeinheit (120) eine Lichtquelle (322) und einen ersten Lichtwellenleiterabschnitt (222) umfasst,
- das Gefäß (110) einen zweiten Lichtwellenleiterabschnitt (212) umfasst,
- der zweite Lichtwellenleiterabschnitt (212) zumindest teilweise oder vollständig in den Außenrahmen des Deckels (215) integriert ist,
- der erste Lichtwellenleiterabschnitt (222) und der zweite Lichtwellenleiterabschnitt (212) so gestaltet sind, dass eine hintere Stirnfläche (323) des ersten Lichtwellenleiterabschnitts (222) an einem Lichtübergangspunkt einer vorderen Stirnfläche (313) des zweiten Lichtwellenleiterabschnitts (212) gegenüberliegt, wenn die Grundeinheit (120) und das Gefäß (110) miteinander verbunden sind,
- eine hintere Stirnfläche (315) des zweiten Lichtwellenleiterabschnitts (212) in das Gefäß (110) weist,
- der erste Lichtwellenleiterabschnitt (222) so ausgelegt ist, dass er von der Lichtquelle (322) emittiertes Licht (324) zum Lichtübergangspunkt leitet, und
- der zweite Lichtwellenleiterabschnitt (212) so ausgelegt ist, dass er zwecks Beleuchtens des Inneren des Gefäßes (110) Licht (324) vom Lichtübergangspunkt zu seiner hinteren Stirnfläche (315) leitet, und
wobei das Verfahren (400) Folgendes umfasst:
- Ermitteln (401), ob das Gefäß (110) und die Grundeinheit (120) miteinander verbunden sind, und
- Verhindern (402) des Einschaltens der Lichtquelle (322), wenn ermittelt wird, dass das Gefäß (110) und die Grundeinheit (120) nicht miteinander verbunden sind.

## Revendications

1. Appareil (100) ; dans lequel
- l'appareil (100) comprend une unité de base (120) et un réceptacle (110), qui sont configurés pour être joints et disjoints ;
- le réceptacle (110) comprend un bol (214) et un couvercle (215) pour recouvrir le bol (214) ;
- le couvercle (215) comprend un cadre externe non transparent qui encercle une partie transparente du couvercle (215) ;
- l'unité de base (120) comprend une source de lumière (322) et une première section de guide de lumière (222) ;
- le réceptacle (110) comprend une seconde section de guide de lumière (212) ;
- la seconde section de guide de lumière (212) est au moins partiellement ou complètement intégrée dans le cadre externe du couvercle (215) ;
- la première section de guide de lumière (222) et la seconde section de guide de lumière (212) sont telles qu'au niveau d'un point de transfert de lumière, une face d'extrémité arrière (323) de la première section de guide de lumière (222) soit en face d'une face d'extrémité avant (313) de la seconde section de guide de lumière (212), lorsque l'unité de base (120) et le réceptacle (110) sont joints ;
- une face d'extrémité arrière (315) de la seconde section de guide de lumière (212) est en face d'un intérieur du réceptacle (110) ;
- la première section de guide de lumière (222) est configurée pour guider une lumière (324) qui est émise par la source de lumière (322) jusqu'au point de transfert de lumière ; et
- la seconde section de guide de lumière (212) est configurée pour guider la lumière (324) du point de transfert de lumière à la face d'extrémité arrière (315) de la seconde section de guide de lumière (212) pour l'éclairage de l'intérieur du réceptacle (110).

2. Appareil (100) selon la revendication 1, dans lequel la face d'extrémité arrière (323) de la première section de guide de lumière (222) et la face d'extrémité avant (313) de la seconde section de guide de lumière (212) sont configurées de telle sorte que
- la lumière (324) soit couplée à partir de la face d'extrémité arrière (323) de la première section de guide de lumière (222) sur une lame d'air (303) dans la face d'extrémité avant (313) de la seconde section de guide de lumière (212) ; et/ou
- 50 % ou plus de la lumière (324), qui est émise au niveau de la face d'extrémité arrière (323) de la première section de guide de lumière (222), soient couplés dans la face d'extrémité avant (313) de la seconde section de guide de lumière (212).

3. Appareil (100) selon la revendication 2, dans lequel la lame d'air (303) possède une largeur de 1 mm ou plus.

4. Appareil (100) selon l'une quelconque des revendications précédentes, dans lequel
- la face d'extrémité arrière (323) de la première section de guide de lumière (222) possède une forme convexe ; et
- la face d'extrémité avant (313) de la seconde section de guide de lumière (212) possède une forme concave correspondante.

5. Appareil (100) selon l'une quelconque des revendications précédentes, dans lequel
- le réceptacle (110), en particulier le bol (214) du réceptacle (110), possède un rebord supérieur ; et
- la face d'extrémité avant (313) de la seconde section de guide de lumière (212) est située au niveau du rebord supérieur du réceptacle (110).

6. Appareil (100) selon l'une quelconque des revendications précédentes, dans lequel
- la première section de guide de lumière (222) et la seconde section de guide de lumière (212) possèdent chacune une orientation horizontale au niveau du point de transfert ; et
- la seconde section de guide de lumière (212) est incurvée de telle sorte que l'orientation de la seconde section de guide de lumière (212) possède une composante verticale au niveau de la face d'extrémité arrière (315), et/ou de telle sorte que la face d'extrémité arrière (315) de la seconde section de guide de lumière (212) pointe vers un fond du réceptacle (110).

7. Appareil (100) selon l'une quelconque des revendications précédentes, dans lequel la face d'extrémité arrière (315) de la seconde section de guide de lumière (212) est configurée pour diffuser la lumière (324) dans l'intérieur du réceptacle (110), notamment de telle sorte que la lumière (324) diffusée couvre une plage angulaire de ±20° ou plus, de préférence de ±30° ou plus, par rapport à la perpendiculaire à la face d'extrémité arrière (315) de la seconde section de guide de lumière (212).

8. Appareil (100) selon l'une quelconque des revendications précédentes, dans lequel
- l'appareil (100), en particulier l'unité de base (120), comprend une unité de commande (121) ; et
- l'unité de commande (121) est configurée pour commander la source de lumière (322), en particulier pour l'activation ou la désactivation de la source de lumière (322) et/ou pour l'adaptation d'une propriété de la lumière (324) qui est émise par la source de lumière (322).

9. Appareil (100) selon la revendication 8, dans lequel l'unité de commande (121) est configurée pour
- déterminer, en particulier à l'aide d'informations de mesure d'un capteur de positionnement (226) de l'appareil (100), si le réceptacle (110) et l'unité de base (120) sont joints ou non, en particulier si le réceptacle (110) et l'unité de base (120) sont joints dans une position alignée ou non ; et
- permettre l'activation de la source de lumière (322), s'il est déterminé, en particulier uniquement s'il est déterminé, que le réceptacle (110) et l'unité de base (120) sont joints, en particulier sont joints dans la position alignée ; et/ou
- empêcher l'activation de la source de lumière (322), s'il est déterminé que le réceptacle (110) et l'unité de base (120) ne sont pas joints, en particulier ne sont pas joints dans la position alignée.

10. Appareil (100) selon l'une quelconque des revendications 8 à 9, dans lequel l'unité de commande (121) est configurée pour
- déterminer des informations de température concernant une température d'un contenu du réceptacle (110) ; et
- adapter une propriété, en particulier une couleur et/ou une intensité et/ou un état de scintillement, de la lumière (324) qui est émise par la source de lumière (322) en fonction des informations de température.

11. Appareil (100) selon l'une quelconque des revendications 8 à 10, dans lequel l'unité de commande (121) est configurée pour
- déterminer des informations de couleur concernant une couleur d'un contenu du réceptacle (110), et/ou des informations de recette concernant une recette d'un produit alimentaire qui est transformé à l'intérieur du réceptacle (110) et/ou des informations de type concernant un type de transformation qui est réalisée ; et
- adapter une propriété, en particulier une couleur et/ou une intensité et/ou un état de scintillement, de la lumière (324) qui est émise par la source de lumière (322) en fonction des informations de couleur et/ou des informations de recette et/ou des informations de type.

12. Appareil (100) selon l'une quelconque des revendications précédentes, dans lequel
- le couvercle (215) du réceptacle (110) ne comprend aucun composant électrique ; et/ou
- le réceptacle (110), en particulier le couvercle (215) du réceptacle (110), ne comprend aucun élément électroluminescent actif et/ou à commande électrique ; et/ou
- le réceptacle (110), en particulier le couvercle (215) du réceptacle (110), est lavable au lave-vaisselle.

13. Appareil (100) selon l'une quelconque des revendications précédentes, dans lequel la source de lumière (322) comprend une diode électroluminescente, notamment une diode électroluminescente multicolore.

14. Appareil (100) selon une quelconque revendication précédente, dans lequel
- l'appareil (100) est un appareil de cuisine et/ou de cuisson ; et/ou
- l'appareil (100) est configuré pour transformer un produit alimentaire qui est placé à l'intérieur du réceptacle (110).

15. Procédé (400) de commande d'une source de lumière (322) d'un appareil (100) ; dans lequel
- l'appareil (100) comprend une unité de base (120) et un réceptacle (110), qui sont configurés pour être joints et disjoints ;
- le réceptacle (110) comprend un bol (214) et un couvercle (215) pour recouvrir le bol (214) ;
- le couvercle (215) comprend un cadre externe non transparent qui encercle une partie transparente du couvercle (215) ;
- l'unité de base (120) comprend une source de lumière (322) et une première section de guide de lumière (222) ;
- le réceptacle (110) comprend une seconde section de guide de lumière (212) ;
- la seconde section de guide de lumière (212) est au moins partiellement ou complètement intégrée dans le cadre externe du couvercle (215) ;
- la première section de guide de lumière (222) et la seconde section de guide de lumière (212) sont telles qu'au niveau d'un point de transfert de lumière, une face d'extrémité arrière (323) de la première section de guide de lumière (222) soit en face d'une face d'extrémité avant (313) de la seconde section de guide de lumière (212), lorsque l'unité de base (120) et le réceptacle (110) sont joints ;
- une face d'extrémité arrière (315) de la seconde section de guide de lumière (212) est en face d'un intérieur du réceptacle (110) ;
- la première section de guide de lumière (222) est configurée pour guider une lumière (324) qui est émise par la source de lumière (322) jusqu'au point de transfert de lumière ; et
- la seconde section de guide de lumière (212) est configurée pour guider la lumière (324) du point de transfert de lumière à la face d'extrémité arrière (315) de la seconde section de guide de lumière (212) pour l'éclairage de l'intérieur du réceptacle (110) ; et
dans lequel le procédé (400) comprend,
- la détermination (401) de si le réceptacle (110) et l'unité de base (120) sont joints ou non ; et
- le fait d'empêcher (402) l'activation de la source de lumière (322), s'il est déterminé que le réceptacle (110) et l'unité de base (120) ne sont pas joints.
